# EUROPÄISCHE PATENTSCHRIFT

(11) **EP 2 940 662 B1**
(45) Veröffentlichungstag und Bekanntmachung des Hinweises auf die Patenterteilung: **30.10.2019**
(21) Anmeldenummer: 14166588.5
(22) Anmeldetag: 30.04.2014
(51) Int. Cl.: G07D 11/237, G07D 11/26, G07D 11/34, G07D 11/24, B65H 7/20, G07F 19/00

(54) **Verfahren zum Betreiben eines Geldautomaten bei Mehrfachabzügen**
Method for operating an automatic teller machine when multiple withdrawals are made
Procédé de fonctionnement d'un distributeur de billets pour des retraits multiples

(43) Veröffentlichungstag der Anmeldung: 04.11.2015
(73) Patentinhaber: Wincor Nixdorf International GmbH, 33106 Paderborn (DE)
(72) Erfinder: Höschen, Hermann, 33102 Paderborn (DE); Moock, Stefan, 33184 Altenbeken (DE)

(56) Entgegenhaltungen:
- DE-A1-102009 006 810
- DE-A1-102011 000 794
- US-A1- 2005 091 159
- US-A1- 2013 248 320

## Beschreibung

Die Erfindung betrifft ein Verfahren zum Betreiben einer Vorrichtung zur Handhabung von Wertscheinen, insbesondere eines Geldautomaten. Bei dem Verfahren werden Wertscheine entsprechend einer Auszahlungsaufforderung aus Geldkassetten der Vorrichtung entnommen. Mit Hilfe eines Mehrfachabzugssensors werden Mehrfachabzüge, die beim Entnehmen der Wertscheine aus der Geldkassette auftreten, detektiert.

Bei der Entnahme von Wertscheinen aus Geldkassetten für die Auszahlung eines angeforderten Geldbetrages über den Geldautomaten kann es dazu kommen, dass sogenannte Mehrfachabzüge auftreten, d.h., dass mehrere sich zumindest teilweise überlappende Wertscheine auf einmal aus einer Geldkassette abgezogen werden, obwohl eigentlich nur ein Wertschein abgezogen werden sollte. Dies kann beispielsweise bei verschmutzten, klebrigen Wertscheinen leicht auftreten.

Bekannte Geldautomaten weisen deswegen mehrere Dickensensoren auf, wobei jeweils nach dem Abzugsmodul einer Geldkassette ein solcher Dickensensor angeordnet ist, mit dessen Hilfe die Dicke der entnommenen Wertscheine ermittelt werden kann. Über die Dicke kann bestimmt werden, ob mehr als ein Wertschein abgezogen wurde, also ein Mehrfachabzug vorliegt. Wurde entsprechend ein Mehrfachabzug detektiert, so werden Wertscheine dieses Mehrfachabzuges nicht ausgezahlt, sondern in eine hierfür vorgesehene Rejectkassette transportiert. Für die Auszahlung des Geldbetrages werden entsprechend neue Wertscheine aus den Geldkassetten entnommen.

Problematisch an diesem bekannten Verfahren ist es, dass nach dem Auftritt eines Mehrfachabzuges nicht mehr der korrekte Bestand der entsprechenden Geldkassette an Wertscheinen bekannt ist, da man nicht weiß, wie viele Wertscheine der Mehrfachabzug enthält. Dies ist insbesondere bei der Mischspeicherung von Banknoten sehr kritisch, da nicht mehr gewusst wird, eine Banknote welcher Denomination als nächstes der entsprechenden Geldkassette entnommen werden könnte. Darüber hinaus ist die Sicherheit über den Bestand der Geldkassette an Wertscheinen für ein Cash Cycle Management absolut wichtig. Bei dem sogenannten Cash Cycle Management werden Geldkassetten, ohne zuvor einem Cash Center zugeführt zu werden, direkt zwischen Geldautomaten und anderen Vorrichtungen zur Handhabung von Wertscheinen, beispielsweise Kassensystemen, ausgetauscht. Dies ist nur dann möglich, wenn auch tatsächlich der korrekte Bestand jeder Geldkassette bekannt ist.

Aus dem Dokument DE 10 2009 006 810 A1 ist ein Geldautomat bekannt, bei dem nach Auftreten eines Mehrfachabzuges die Wertscheine dieses Mehrfachabzuges zunächst in einen Zwischenspeicher transportiert werden. Anschließend werden die Wertscheine dem Zwischenspeicher einzeln entnommen und einer Leseeinheit zugeführt, mit deren Hilfe die Denomination der Banknoten ermittelt wird. Nachteilig an diesem Geldautomaten ist, dass somit eine extra Vereinzelungseinheit zur Vereinzelung der Wertscheine des Zwischenspeichers vorgesehen werden muss. Insbesondere ist dies nur sehr aufwendig zu realisieren, wenn als Zwischenspeicher ein Rollenspeicher verwendet wird, da auf dem Rollenspeicher die Wertscheine des Mehrfachabzuges entsprechend überlappend gespeichert werden.

Das Dokument DE 10 2007 028 858 A1 beschreibt einen Geldautomaten, bei dem, wenn während der Einzahlung Mehrfachabzüge auftreten, diese Mehrfachabzüge zunächst in einem Zwischenspeicher zwischengespeichert werden. Anschließend wird erneut eine Vereinzelung versucht.

Ein weiterer Geldautomat ist aus dem Dokument DE 10 2008 029 995 A1 bekannt.

Aus dem Dokument US 2005/0091159 A1 ist ein Geldautomat bekannt, bei dem die aus den Geldkassetten entnommenen Wertscheine vor der Ausgabe auf ihre Echtheit und auf aufgetretene Mehrfachabzüge überprüft werden. Diejenigen Wertscheine, die als unecht klassifiziert wurden und/oder bei denen Mehrfachabzüge aufgetreten sind, werden einem Zwischenspeicher zugeführt und von diesem anschließend wieder entweder den Geldkassetten oder einer Rejectkassette zugeführt.

Es ist Aufgabe der Erfindung, ein Verfahren zum Betreiben einer Vorrichtung zur Handhabung von Wertscheinen anzugeben, mit dessen Hilfe auf einfach Weise ein sicheres Cash Cycle Management auch beim Auftreten von Mehrfachabzügen gewährleistet werden kann.

Diese Aufgabe wird durch ein Verfahren mit den Merkmalen des Anspruchs 1 gelöst. Vorteilhafte Weiterbildungen der Erfindung sind in den abhängigen Ansprüchen angegeben.

Erfindungsgemäß werden, wenn bei einem Auszahlungsvorgang ein Mehrfachabzug detektiert wurde, zumindest die Wertscheine dieses Mehrfachabzuges in ein Eingabe- und/oder Ausgabefach zur Eingabe und/oder Ausgabe von Wertscheinen transportiert. Es erfolgt jedoch zumindest zunächst keine Ausgabe dieser Wertscheine, sondern die Wertscheine des Mehrfachabzuges werden zunächst aus dem Eingabe- und/oder Ausgabefach vereinzelt und einer Leseeinheit zugeführt. Mit Hilfe der Leseeinheit wird die Denomination der einzelnen Wertscheine und/oder die Anzahl der Wertscheine des Mehrfachabzuges ermittelt. Die ermittelte Anzahl und/oder Denomination der Wertscheine des Mehrfachabzuges wird bei dem Bestandsmanagement der Geldkassette berücksichtigt. Insbesondre erfolgt dann, wenn tatsächlich ein Mehrfachabzug aufgetreten ist, eine entsprechend Korrektur der Zählerstände der einzelnen Geldkassetten, insbesondere der Zählerstände derjenigen Geldkassetten, aus denen die Wertscheine des Mehrfachabzuges entnommen wurden.

Somit wird auf einfache Weise erreicht, dass nach dem Auftreten eines Mehrfachabzuges durch die entsprechende Vereinzelung dieses Mehrfachabzuges und Bestimmung der Anzahl der Wertscheine und/oder Denomination wieder der korrekte Zählerstand der einzelnen Geldkassetten ermittelt werden kann und somit ein sicheres Cash-Cycle-Management möglich ist.

Durch das Zuführen der Wertscheine des Mehrfachabzuges zu dem Eingabe- und/oder Ausgabefach wird erreicht, dass für die Vereinzelung und spätere Bestimmung der Denomination und/oder Anzahl Einheiten verwendet werden können, die ohnehin für die Vereinzelung und Überprüfung der Wertscheine von eingegebenen Wertscheinstapeln verwendet werden. Somit kann auf zusätzliche Bauteile verzichtet werden und es wird ein besonders einfacher Aufbau des Geldautomaten erreicht.

Durch das erfindungsgemäße Verfahren können auch andere Ungenauigkeiten der Bestände der Geldkassetten an Wertscheinen, die nicht durch einen Mehrfachabzug, sondern einen anderen Fehler entstanden sind, korrigiert werden, so dass jederzeit ein sicheres Bestandsmanagement gewährleistet ist. Solche Fehler können beispielsweise Wertscheinstaus, zusammengelaufene Wertscheine und/oder Fehler in der Elektronik, die die Nachverfolgung von Wertscheinen innerhalb der Vorrichtung zur Handhabung von Wertscheinen verhindern, beispielsweise Fehler von Lichtschranken, anderer Sensoren oder des Bus-Systems, sein.

Es ist besonders vorteilhaft, wenn nur genau ein Mehrfachabzugssensor zur Ermittlung von Mehrfachabzügen vorgesehen ist, wobei über diesen Mehrfachabzugssensor sogar unabhängig davon, aus welcher Geldkassette die Wertscheine entnommen wurden, ein Mehrfachabzug detektiert werden kann. Hierzu ist insbesondere der Mehrfachabzugssensor an einer Stelle des Transportpfades angeordnet, der hinter allen Geldkassetten liegt, dass die Wertscheine, unabhängig davon, welcher Geldkassette sie entnommen wurden, an diesem Sensor vorbeitransportiert werden müssen. Hierdurch wird erreicht, dass durch das Einsparen eines individuellen Sensors für jede Geldkassette entsprechend Kosten und Bauraum minimiert werden.

Um trotz des Vorsehens nur eines Mehrfachabzugssensors sicher bestimmen zu können, aus welcher Geldkassette die Wertscheine des entsprechenden Mehrfachabzugs entnommen wurden, wird bei der Entnahme von Wertscheinen aus einer der Geldkassette den Wertschein jeweils ein Zeitstempel zugeordnet. Über diesen Zeitstempel kann dann, wenn über den Mehrfachabzugssensor ein Mehrfachabzug detektiert wurde, sicher und eindeutig bestimmt werden, welcher der Geldkassetten diese Wertscheine entnommen wurden. Der Zeitstempel ist insbesondere derart ausgebildet, dass in einer Steuereinheit eine Abspeicherung der Reihenfolge der entnommenen Wertscheine erfolgt, so dass durch ein entsprechendes Zählen der Wertscheine beim Vorbeitransport an dem Mehrfachabzugssensor bestimmt werden kann, bei welchem Wertschein eventuell ein Mehrfachabzug aufgetreten ist. Alternativ kann die Zuordnung auch über entsprechende Zeitermittlungen, die der Länge der Transportwege von dem einzelnen Geldkassetten zu dem Mehrfachabzugssensor entsprechen, bestimmt werden.

Es ist besonders vorteilhaft, wenn der Mehrfachabzugssensor in Form eines Dickensensors ausgebildet ist, mit dessen Hilfe die Dicke des bzw. der an dem Dickensensor vorbeitransportierten Wertscheine ermittelt werden kann. Über die Dicke kann zuverlässig auf das Vorliegen von Mehrfachabzügen geschlossen werden.

Bei einer besonders bevorzugten Ausführungsform werden, unabhängig davon, ob ein Mehrfachabzug detektiert wurde oder nicht, zunächst alle Wertscheine der Auszahlungsanforderung, also alle Wertscheine, die zur Auszahlung des angeforderten Betrages von der Steuereinheit ausgewählt wurden, den Geldkassetten entnommen wurden und in das Eingabe- und/oder Ausgabefach transportiert. Wenn mit Hilfe des Mehrfachabzugssensors kein Mehrfachabzug detektiert wurde, werden entsprechend alle Wertscheine der Auszahlungsanforderung ausgegeben.

Wurde dagegen ein Mehrfachabzug detektiert, so werden alle Wertscheine der Auszahlungsanforderung, also sowohl die Wertscheine des Mehrfachabzugs als auch die anderen einzeln abgezogenen Wertscheine, wieder aus dem Eingabe- und/oder Ausgabefach vereinzelt und der Leseeinheit zugeführt, so dass die Denomination und/oder Anzahl der einzelnen Wertscheine ermittelt werden kann. Anschließend werden die Wertscheine in einem Zwischenspeicher zwischengespeichert.

Wenn die Anzahl der über die Leseeinheit ermittelten Wertscheine und/oder der Gesamtwert der Wertscheine, die dem Eingabe- und/oder Ausgabefach entnommen wurden, mit der planmäßigen Anzahl bzw. dem planmäßigen Gesamtwert übereinstimmt, so werden die Wertscheine wieder dem Zwischenspeicher entnommen und erneut dem Eingabe- und/oder Ausgabefach zugeführt, über das sie dann an die Bedienperson der Vorrichtung ausgegeben werden. Hierdurch wird erreicht, dass, wenn der Mehrfachabzugssensor irrtümlicherweise einen Mehrfachabzug detektiert hat, nicht unnötig diese Wertscheine einbehalten werden, sondern diese dennoch ausgegeben werden. Somit wird der gesamte Auszahlungsprozess vereinfacht und es wird eine unnötige Rückführung von Wertscheinen vermieden. Unter der planmäßigen Anzahl wird insbesondere die Anzahl an Wertscheinen verstanden, die zur Auszahlung des angeforderten Betrages von der Steuereinheit bestimmt wurde. Der planmäßige Gesamtwert entspricht dem angeforderten Auszahlungsbetrag.

Wird jedoch nach dem Entnehmen aller Wertscheine des Auszahlungsvorganges ermittelt, dass die Anzahl der Wertscheine bzw. der Gesamtwert der Wertscheine nicht mit der planmäßigen Anzahl bzw. planmäßigen Gesamtwert übereinstimmt, so werden die Wertscheine wieder dem Zwischenspeicher entnommen und entweder einer hierfür speziell vorgesehenen Rejectkassette zugeführt und alternativ den Geldkassetten zugeführt. Hierbei werden die Wertscheine insbesondere entsprechend ihrer Denomination auf den Geldkassetten verteilt und vorzugsweise denjenigen Geldkassetten zugeführt, denen sie vorher auch entnommen wurden. Das Zuführen der Wertscheine zu den Geldkassetten hat gegenüber dem Zuführen zur Rejectkassette den Vorteil, dass die Wertscheine wieder für eine spätere Auszahlung zur Verfügung stehen und somit der Abstand zwischen den Befüllungen des Geldautomaten verlängert werden kann.

Wenn die Anzahl der Wertscheine und/oder der Gesamtwert der Wertscheine mit der planmäßigen Anzahl bzw. den planmäßigen Gesamtwert nicht übereinstimmen, so werden ferner die Zählerstände der Geldkassette derart korrigiert, dass der Zählerstand wieder der tatsächlichen Anzahl der aufgenommenen Wertscheine entspricht. Unter dem Zählerstand wird insbesondere die Anzahl der in der Geldkassette momentan aufgenommenen Wertscheine verstanden. Durch die Korrektur des Zählerbestandes wird erreicht, dass jederzeit ein sicheres Cash-Cycle-Management möglich ist.

Hierbei kann die Korrektur der Zählerstände sowohl vor dem Zurückführen der Wertscheine zu den Geldkassetten bzw. dem Zuführen zu den Rejectbehälter als auch danach erfolgen. Ebenso können diese beiden Schritte auch gleichzeitig erfolgen.

Bei einer alternativen Ausführungsform der Erfindung werden, wenn ein Mehrfachabzug detektiert wurde, die Wertscheine dieses Mehrfachabzuges zunächst einem Zwischenspeicher zum Zwischenspeichern von Wertscheinen und somit nicht direkt dem Eingabe- und/oder Ausgabefach zugeführt. Die anderen für den Auszahlungsvorgang entnommenen Wertscheine werden dagegen direkt dem Eingabe- und/oder Ausgabefach zugeführt. Für die Wertscheine des Mehrfachabzugs bzw. demjenigem Wertschein, der eigentlich einzeln entnommen und nun mit anderen zusammen entnommen wurde, wird insbesondere ein entsprechender Ersatzwertschein aus der jeweiligen Geldkassette oder einer anderen Geldkassette der gleichen Denomination entnommen und ebenfalls dem Eingabe- und/oder Ausgabefach zugeführt. Entsprechend kann anschließend der gewünschte Auszahlungsbetrag an die Bedienperson des Geldautomaten ausgegeben werden.

Nachdem der Auszahlungsvorgang beendet wurde und auch kein weiterer Auszahlungs- oder Einzahlungsvorgang gestartet wurde, werden die Wertscheine des Mehrfachabzuges dem Zwischenspeicher entnommen und dem Eingabe- und/oder Ausgabefach zugeführt. Hierbei werden lediglich die Wertscheine des Mehrfachabzuges bzw., wenn bei einem Auszahlungsvorgang mehrere Mehrfachabzüge aufgetreten sind, die Wertscheine dieser mehreren Mehrfachabzüge, dem Eingabe- und/oder Ausgabefach zugeführt. Anschließend werden entsprechend auch nur diese Wertscheine aus dem Eingabe- und/oder Ausgabefach vereinzelt und der Leseeinheit zugeführt, wobei die Leseeinheit dann wiederum die Anzahl und/oder Denomination der ihr zugeführten Wertscheine ermittelt.

Anschließend werden die vereinzelten Wertscheine entweder einer Rejectkassette und/oder den Geldkassetten, insbesondere jeweils den Geldkassetten, aus denen sie entnommen wurden, zugeführt. Hierbei erfolgt das Zuführen insbesondere direkt, d.h., dass die Wertscheine zuvor nicht wieder dem Zwischenspeicher zugeführt werden. Alternativ können auch zunächst die Wertscheine dem Zwischenspeicher zugeführt werden und erst dann, wenn die Anzahl und/oder Denomination aller Wertscheine des Mehrfachabzuges ermittelt wurde, aus dem Zwischenspeicher entnommen und der Rejectkassette bzw. den Geldkassetten zugeführt werden. Das direkte Zuführen hat den Vorteil, dass der Vorgang schneller beendet werden kann.

Durch das Zuführen der Wertscheine zu den Geldkassetten wird wiederum erreicht, dass diese wieder für die nächste Auszahlung zur Verfügung stehen.

Besonders vorteilhaft ist es, wenn, nachdem die Anzahl und/oder Denomination der Wertscheine des Mehrfachabzugs ermittelt wurde, die Zählerstände der Geldkassetten derart korrigiert werden, dass der Zählerstand wieder der tatsächlichen Anzahl an aufgenommenen Wertscheinen entspricht. Hierdurch wird wiederum erreicht, dass ein sicheres Cash-Cycle-Management möglich ist.

Auch bei diesem Verfahren kann die Korrektur der Zählerstände wahlweise vor dem Zuführen der Wertscheine zu den Geldkassetten bzw. der Rejectkassette oder nachher erfolgen. Ebenso können alternativ diese beiden Schritte gleichzeitig durchgeführt werden.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Fig. 1: eine schematische Darstellung eines Geldautomaten;
- Fig.2: ein Flussdiagramm eines Verfahrens zum Betreiben einer Vorrichtung zur Handhabung von Wertscheinen gemäß einer ersten Ausführungsform; und
- Fig. 3: ein Flussdiagramm eines Verfahrens zum Betreiben einer Vorrichtung zur Handhabung von Wertscheinen gemäß einer zweiten Ausführungsform.

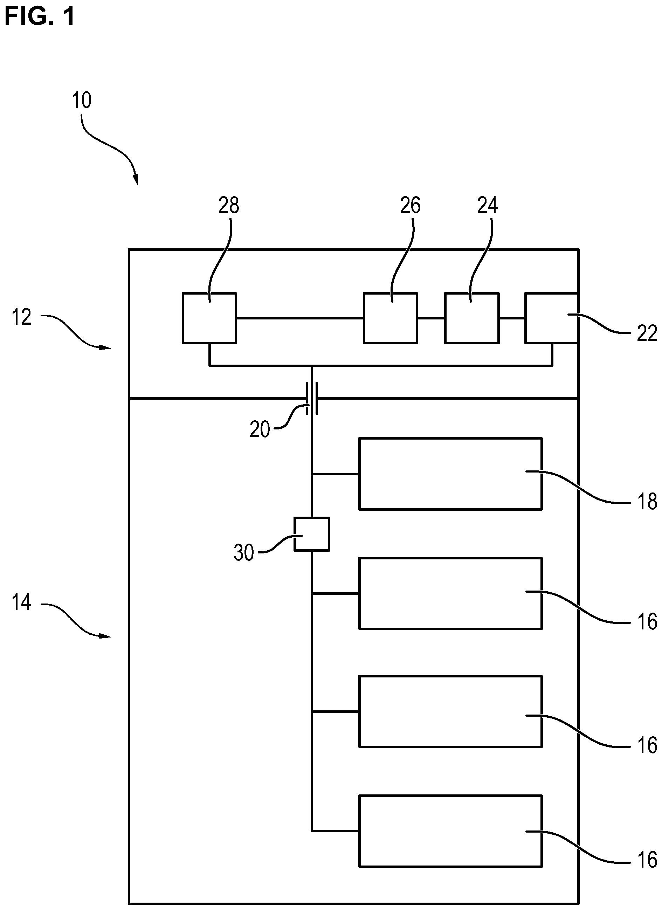

In Figur 1 ist eine schematische Darstellung einer als Geldautomat 10 ausgebildeten Vorrichtung zur Handhabung von Wertscheinen dargestellt. Alternativ kann es sich bei der Vorrichtung zur Handhabung von Wertscheinen auch um eine automatische Tresorkasse oder ein automatisches Kassensystem handeln.

Der Geldautomat 10 umfasst ein Kopfmodul 12 sowie ein Tresormodul 14, in dem in dem in Figur 1 gezeigten Ausführungsbeispiel drei Geldkassetten 16 sowie eine Reject und Retractkassette 18 aufgenommen sind. Der Geldautomat 10 ist als Recyclingautomat ausgebildet, d.h., dass in ihn sowohl Wertscheine eingezahlt und auch wieder ausgezahlt werden können. Alternativ kann es sich bei dem Geldautomaten 10 auch um einen reinen Geldauszahlungsautomaten handeln.

In den Geldkassetten 16 sind die eingezahlten Wertscheine und die für die Auszahlung wieder zur Verfügung stehenden Wertscheine aufgenommen. Hierbei sind die Wertscheine insbesondere in Form eines Wertscheinstapels auf ihren Kanten stehend aufgenommen und können über nicht dargestellte Vereinzelungs- und Zuführmodule aus den Geldkassetten 16 vereinzelt und entnommen werden und den Geldkassetten 16 zugeführt werden. Die Reject- und Retractkassette 18 dient zur Aufnahme von nicht entnommenen Wertscheinen und von fälschungsverdächtigen Wertscheinen oder anderen Wertscheinen, die nicht wieder ausgezahlt werden sollen.

In dem Tresormodul 14 ist ein Schlitz 20 vorgesehen, durch den die Wertscheine zwischen dem Kopfmodul 12 und dem Tresormodul 14 transportiert werden können. In dem stark vereinfacht dargestellten Kopfmodul 12 ist eine Eingabe- und/oder Ausgabeeinheit 22 zur Eingabe von Wertscheinen und/oder zur Ausgabe von Wertscheinen an einen Kunden dargestellt.

Werden Wertscheine von den Kunden eingegeben, so werden diese über eine Vereinzelungseinheit 24 vereinzelt und anschließend einer Leseeinheit 26 zugeführt, mit deren Hilfe die Denomination und/oder Echtheit der einzelnen Wertscheine ermittelt werden kann. Anschließend werden diese Wertscheine einem Zwischenspeicher 28 zugeführt und solange auf diesem gespeichert, bis alle auf einmal als Wertscheinbündel eingegebenen Wertscheine vereinzelt wurden und ihre Echtheit überprüft wurde. Bei dem Zwischenspeicher 28 handelt es sich insbesondere um einen Rollenspeicher. Anschließend werden die eingezahlten Wertscheine den Geldkassetten 16 zugeführt.

Umgekehrt werden bei einer Auszahlung, nachdem eine entsprechende Auszahlungsanforderung durch einen Kunden eingegeben wurde, die zur Auszahlung des gewünschten Betrages benötigten Wertscheine aus den Geldkassetten 16 entnommen. Hierbei wird insbesondere über eine nicht dargestellte Steuereinheit in Abhängigkeit des gewünschten Auszahlungsbetrages bestimmt, wie viele Wertscheine aus welcher Geldkassette 16 entnommen werden sollen.

Bei der Entnahme der Wertscheine aus den Geldkassetten 16 kann es dazu kommen, dass unbeabsichtigter Weise nicht jeder Wertschein einzeln abgezogen wird, sondern es zu Mehrfachabzügen kommt. Unter einem Mehrfachabzug wird insbesondere verstanden, dass zwei oder mehr sich zumindest teilweise überlappende Wertscheine abgezogen werden.

Problematisch an solchen Doppelabzügen ist, dass, wenn sie an den Kunden ausgegeben würden, dieser mehr Geld bekommen würde, als er angefordert hat und als von seinem Konto abgebucht wird. Um dies zu vermeiden ist ein Dickensensor 30 vorgesehen, mit dessen Hilfe die Dicke der an ihm vorbeitransportierten, den Geldkassetten 16 entnommenen Wertscheine bestimmt wird. Über die Dicke kann einfach ermittelt werden, wenn ein Mehrfachabzug vorliegt.

Bei bekannten Geldautomaten 10 wurden die Mehrfachabzüge dann der Reject- und Retractkassette 18 zugeführt. Problematisch hieran ist jedoch, dass dann nicht bekannt ist, wie viele Wertscheine die einzelnen Mehrfachabzüge enthalten, so dass auch der Bestand der Geldkassetten 16 nicht mehr bekannt ist. Dies ist insbesondere für ein Cash-Cycle-Management, bei dem Geldkassetten zwischen Geldautomaten 10 ausgetauscht werden, ohne dass vorher ein Zuführen zu einem Cash Center erfolgt, kritisch.

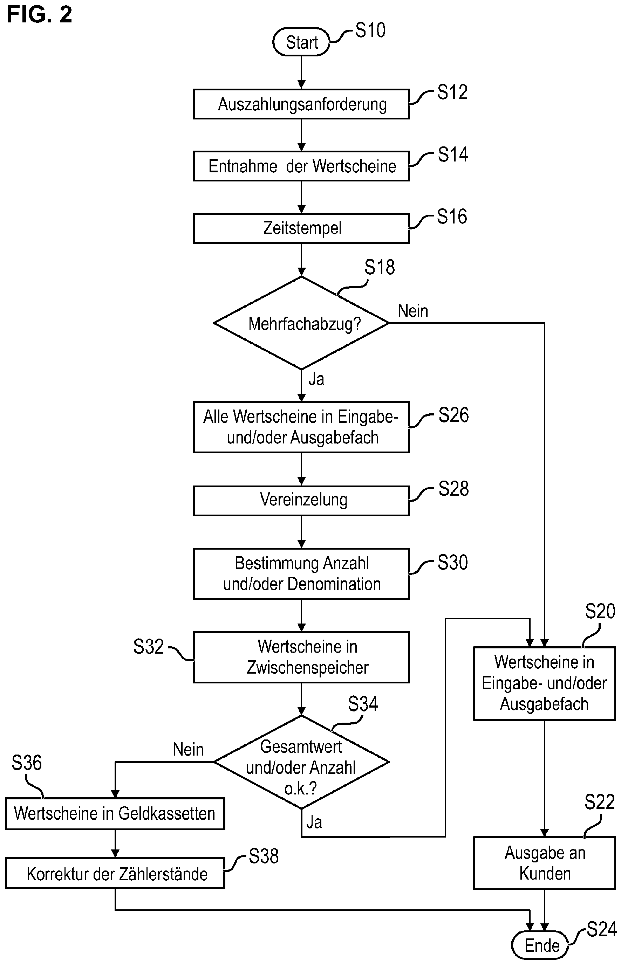

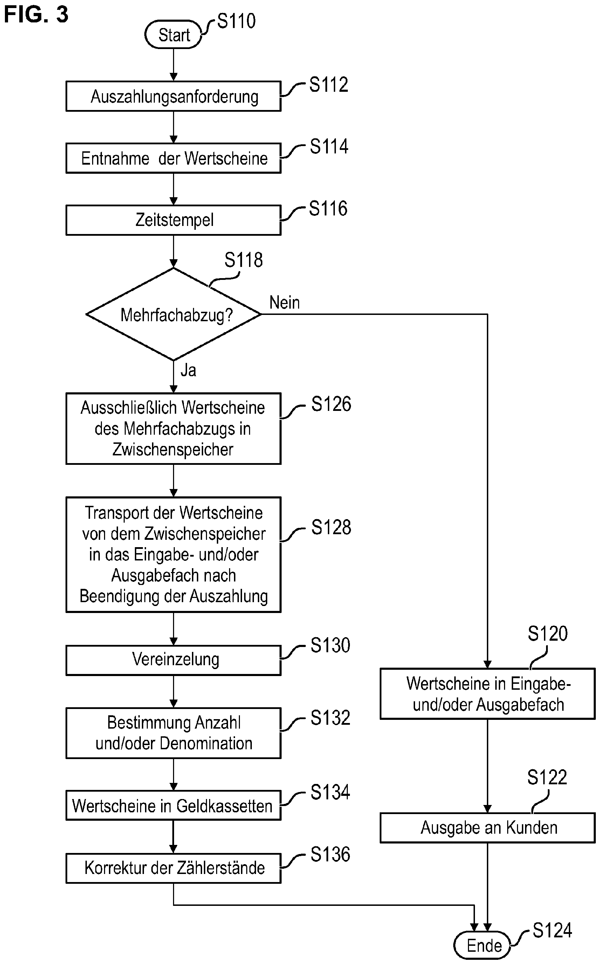

In den Figuren 2 und 3 sind jeweils Flussdiagramme eines Verfahrens zum Betreiben einer Vorrichtung zur Handhabung von Wertscheinen gezeigt, mit denen auch beim Auftreten von Mehrfachabzügen jederzeit der Bestand der Geldkassetten 16 sicher ermittelt werden kann, so dass ein zuverlässiges Bestandsmanagement durchgeführt werden kann.

Das in Figur 2 gezeigte Verfahren gemäß der ersten Ausführungsform wird im Schritt S10 gestartet. Anschließend erfolgt im Schritt S12 eine Auszahlungsanforderung, mit der von einem Kunden die Zahlung eines gewünschten Geldbetrages gefordert wird. Mit Hilfe einer Steuereinheit wird ermittelt, welche Wertscheine welchen Geldkassetten 16 zur Auszahlung des gewünschten Betrages diese Auszahlungsanforderung entnommen werden müssen. Im Schritt S 14 erfolgt dann schrittweise die Entnahme der einzelnen Wertscheine aus den Geldkassetten 16. Hierbei wird im Schritt S16 jedem Wertschein ein sogenannter Zeitstempel zugeordnet, über den eine Zuordnung der einzeln entnommenen Wertscheine zu den Geldkassetten 16 möglich ist. Dieser Zeitstempel kann insbesondere in Form der Abspeicherung der Reihenfolge der den einzelnen Geldkassette entnommenen Wertscheinen erfolgen.

Das Vorsehen eines solchen Zeitstempels hat den Vorteil, dass nur ein einziger Dickensensor 30 zur Ermittlung von Mehrfachabzügen von von allen Geldkassetten 16 entnommenen Wertscheinen vorgesehen sein muss. Durch den Zeitstempel kann jederzeit bestimmt werden, welcher Geldkassette 16 der entsprechende Wertschein bzw. die entsprechenden Wertscheine entnommen wurden, für die ein Mehrfachabzug ermittelt wurde. Somit muss nicht für jede Geldkassette 16 ein einzelner Dickensensor vorgesehen sein, wodurch Bauraum und Kosten eingespart werden.

Im Schritt S18 wird mit Hilfe des Dickensensors 30 ermittelt, ob bei der Entnahme der Wertscheine aus den Geldkassetten 16 ein Mehrfachabzug aufgetreten ist. Ist bei allen Wertscheinen der Auszahlungsanforderung kein Mehrfachabzug aufgetreten, so werden alle Wertscheine im Schritt S20 dem Eingabe- und/oder Ausgabefach zugeführt und im Schritt S22 an einen Kunden ausgegeben bevor im Schritt S24 das Verfahren beendet wird.

Wurde im Schritt S18 dagegen ermittelt, dass mindestens ein Mehrfachabzug aufgetreten ist, so werden im Schritt S26 alle Wertscheine der Auszahlungsanforderung in das Eingabe- und/oder Ausgabefach transportiert. Insbesondere werden nicht nur diejenigen Wertscheine, bei denen kein Mehrfachabzug aufgetreten ist, sondern auch die Wertscheine des Mehrfachabzugs in das Eingabe- und/oder Ausgabefach 22 transportiert.

Nachdem alle Wertscheine der Auszahlungsanforderung in dem Eingabe- und/oder Ausgabefach 22 abgelegt wurden, erfolgt, analog wie bei einer Einzahlung von Wertscheinen, im Schritt S28 die Vereinzelung der in dem Eingabe- und/oder Ausgabefach angeordneten Wertscheine. Im Schritt S30 erfolgt mit Hilfe der Leseeinheit 26 die Bestimmung der Anzahl und/oder der Denomination der aus dem Eingabe- und/oder Ausgabefach 22 entnommenen Wertscheine. Hierbei werden die Wertscheine im Schritt S32 zunächst jeweils dem Zwischenspeicher 28 zugeführt, bis alle in dem Eingabe- und/oder Ausgabefach vorhandenen Wertscheine vereinzelt und der Leseeinheit 26 zugeführt worden sind.

Im Schritt S34 wird ermittelt, ob der Gesamtwert der dem Eingabe- und/oder Ausgabefach entnommenen und dem Zwischenspeicher 28 zugeführten Wertscheine bzw. die Anzahl an Wertscheinen in Ordnung ist. Hierbei wird insbesondere ermittelt, ob der Gesamtwert mit dem gewünschten Auszahlungsbetrag bzw. die Anzahl mit der vorbestimmten Anzahl an Wertscheinen, die eigentlich ausgezahlt werden sollte, übereinstimmt.

Stimmt der Gesamtwert bzw. die Anzahl mit den Sollwerten überein, so erfolgt im Schritt S20 der Transport aller Wertscheine aus dem Zwischenspeicher 28 zurück in das Eingabe- und/oder Ausgabefach 22, so dass die Wertscheine im Schritt S22 an den Kunden ausgegeben werden können bevor das Verfahren im Schritt S24 beendet wird.

Wurde dagegen im Schritt S24 ermittelt, dass der Gesamtwert oder die Anzahl nicht okay ist, so werden die Wertscheine im Schritt S36 zurück in die Geldkassetten 16 transportiert. Hierbei werden die Wertscheine insbesondere jeweils in diejenige Geldkassette zurücktransportiert, aus der sie entnommen wurden, und/oder in diejenigen Geldkassetten 16 transportiert, die eine entsprechende Denomination beherbergt.

Alternativ können die Wertscheine im Schritt S36 auch der Reject- und Retractkassette 18 zugeführt werden, was jedoch den Nachteil hat, dass sie nicht wieder für eine weitere Auszahlung zur Verfügung stehen.

Anschließend erfolgt im Schritt S38 die Korrektur der Zählerstände der Geldkassetten 16, d.h., dass die Zähler derart korrigiert werden, dass sie mit dem tatsächlichen Bestand der Geldkassetten an Wertscheinen wieder übereinstimmen. Hierdurch wird erreicht, dass jederzeit der aktuelle Zählerstand bekannt ist und somit ein sicheres Bestandsmanagement gegeben ist. Danach wird das Verfahren im Schritt S24 beendet.

Die Schritte S36 und S38 können in ihrer Reihenfolge auch vertauscht werden oder gleichzeitig ausgeführt werden.

In Figur 3 ist ein Ablaufdiagramm eines Verfahrens zum Betreiben einer Vorrichtung zur Handhabung von Wertscheinen gemäß einer zweiten Ausführungsform dargestellt. Nachdem das Verfahren im Schritt S110 gestartet wurde, erfolgt in den Schritten S112 bis S116 wiederum die Auszahlungsanforderung, die Entnahme der Wertscheine und die Zuordnung der entsprechenden Zeitstempel.

Anschließend wird im Schritt S118 wiederum mit Hilfe des Dickensensors 30 ermittelt, ob ein Mehrfachabzug aufgetreten ist. Ist bei allen Wertscheinen der Auszahlungsanforderung kein Mehrfachabzug aufgetreten, so werden die Wertscheine im Schritt S120 in das Eingabe- und/oder Ausgabefach 22 transportiert und im Schritt S122 an den Kunden ausgegeben, bevor im Schritt S124 das Verfahren beendet wird.

Wird dagegen im Schritt S118 ermittelt, dass mindestens ein Mehrfachabzug aufgetreten ist, so werden im Schritt S126 ausschließlich die Wertscheine dieses Mehrfachabzugs in den Zwischenspeicher 28 transportiert. Die anderen Wertscheine, also diejenigen Wertscheine, bei denen kein Mehrfachabzug aufgetreten ist, werden dagegen nach wie vor in das Eingabe- und/oder Ausgabefach 22 transportiert. Für diejenigen Wertscheine, bei denen ein Mehrfachabzug aufgetreten ist, werden "Ersatzwertscheine" aus den jeweiligen Geldkassetten 16 entnommen, und, sofern hierbei kein Mehrfachabzug aufgetreten ist, in das Eingabe- und/oder Ausgabefach 22 transportiert. Hierüber kann der gewünschte Gesamtbetrag mit der gewünschten Stückelung an den Kunden ausgegeben werden.

Nachdem der Auszahlungsvorgang beendet wurde, d.h., nachdem der Kunde die gewünschten Wertscheine aus dem Eingabe- und/oder Ausgabefach 22 entnommen hat, und wenn keine weitere Auszahlungs- und/oder Einzahlungsvorgang gestartet wurde, werden im Schritt S128 die in dem Zwischenspeiche zwischengespeicherten Wertscheine des Mehrfachabzuges in das Eingabe- und/oder Ausgabefach 22 transportiert. Sollten während eines Auszahlungsvorgangs mehrere Mehrfachabzüge aufgetreten sein, so werden diese entweder gleichzeitig oder nacheinander dem Eingabe- und/oder Ausgabefach zugeführt.

Im Schritt S130 werden die im Eingabe- und/oder Ausgabefach 22 angeordneten Wertscheine des Mehrfachabzuges vereinzelt und der Leseeinheit 26 zugeführt, die im Schritt S132 die Anzahl und die Denomination der entsprechenden Wertscheine bestimmt.

Anschließend werden die Wertscheine im Schritt S134 zurück in die Geldkassetten 16 transportiert, wobei vorzugsweise die Wertscheine jeweils derjenigen Geldkassette 16 zugeführt werden, der sie ursprünglich entnommen wurden. Alternativ kann auch eine Zuführung zu anderen Geldkassetten 16 mit entsprechender Denomination erfolgen. Ebenso ist alternativ möglich, dass die Wertscheine nicht den Geldkassetten 16, sondern der Reject und Retractkassette 18 zugeführt werden.

Im Schritt S126 erfolgt anschließend eine Korrektur der Zählerstände der Geldkassetten 16 derart, dass die Zählerstände wieder dem tatsächlichen Bestand der jeweiligen Geldkassette 16 an Wertscheinen entsprechen. Somit wird auch hier ein sicheres Bestandsmanagement realisiert. Die Schritte S134 und S136 können in ihrer Reihenfolge auch getauscht werden oder gleichzeitig stattfinden.

Im Schritt S124 wird anschließend das Verfahren beendet.

Beide Verfahren haben den Vorteil, dass mit ihrer Hilfe auf einfache und schnelle Weise jeweils der aktuelle Bestand der Geldkassetten 16 an Wertscheinen ermittelt werden kann. Durch das Zuführen der Mehrfachabzüge zu dem Eingabe- und/oder Ausgabefach 22 und die Vereinzelung hieraus wird erreicht, dass keine separate Vereinzelungseinheit und keine separate Leseeinheit zur Vereinzelung der Wertscheine aus dem Zwischenspeicher 28 und zum Lesen der vereinzelten Wertscheine vorgesehen sein muss. Somit wird ein besonders kompakter und einfacher Aufbau erreicht.

Das in Zusammenhang mit Figur 2 beschriebene Verfahren gemäß der ersten Ausführungsform hat gegenüber dem Verfahren der zweiten Ausführungsform nach Anspruch 3 ferner den Vorteil, dass, sofern trotz der positiven Detektion eines Mehrfachabzugs über den Mehrfachabzugssensor 30 der auszuzahlende Betrag stimmt, diese Wertscheine an die Kunden ausgegeben werden und somit die Wertscheintransporte und durchzuführenden Operationen im Geldautomaten 10 minimiert werden.

### Bezugszeichenliste

- 10: Geldautomat
- 12: Kopfmodul
- 14: Tresormodul
- 16: Geldkassette
- 18: Reject und Retractkassette
- 20: Schlitz
- 22: Eingabe- und/oder Ausgabefach
- 24: Vereinzelungseinheit
- 26: Leseeinheit
- 28: Zwischenspeicher
- 30: Dickensensor
- S10 bis S136: Verfahrensschritt

## Patentansprüche

1. Verfahren zum Betreiben einer Vorrichtung zur Handhabung von Wertscheinen, insbesondere eines Geldautomaten,
wobei die Vorrichtung (10) ein Eingabe- und/oder Ausgabefach (22) zur Eingabe und/oder Ausgabe von Wertscheinen an einen Kunden umfasst,
bei dem Wertscheine entsprechend einer Auszahlungsaufforderung Geldkassetten (16) der Vorrichtung (10) entnommen werden,
bei dem mit Hilfe eines Mehrfachabzugssensors (30) Mehrabzüge der entnommenen Wertscheine detektiert werden,
bei dem, wenn ein Mehrfachabzug detektiert wurde, zumindest die Wertscheine des Mehrfachabzugs in das Eingabe- und/oder Ausgabefach (22) transportiert werden,
bei dem die Wertscheine des Mehrfachabzugs aus dem Eingabe- und/oder Ausgabefach (22) vereinzelt werden,
bei dem mit Hilfe einer Leseeinheit (26) die Denomination und/oder Anzahl der Wertscheine des Mehrfachabzug ermittelt wird, und
bei dem die ermittelte Anzahl und/oder Denomination der Wertscheine des Mehrfachabzugs beim Bestandsmanagement der Geldkassetten (16) berücksichtigt wird.

2. Verfahren nach Anspruch 1, **dadurch gekennzeichnet, dass** nur ein Mehrfachabzugssensor (30) zur Ermittlung von Mehrfachabzügen für von allen Geldkassetten (16) entnommenen Wertscheinen verwendet wird.

3. Verfahren nach Anspruch 2, **dadurch gekennzeichnet, dass** in einer Steuereinheit allen entnommenen Wertscheinen ein Zeitstempel zugeordnet wird, mit dessen Hilfe bei der Ermittlung eines Mehrfachabzugs eine Zuordnung des Mehrfachabzug zu der Geldkassette (16), aus der er entnommen wurde, möglich ist.

4. Verfahren nach einem der vorhergehenden Ansprüche, **dadurch gekennzeichnet, dass** als Mehrfachabzugssensor (30) ein Dickensensor zur Ermittlung der Dicke der entnommenen Wertscheine verwendet wird.

5. Verfahren nach einem der vorherhergehenden Ansprüche, **dadurch gekennzeichnet, dass**, wenn ein Mehrabzug detektiert wurde, zunächst alle Wertscheine der Auszahlungsanforderung in das Eingabe- und/oder Ausgabefach (22) transportiert werden, dass die Wertscheine dann aus dem Eingabe- und/oder Ausgabefach vereinzelt werden, dass mit Hilfe einer Leseeinheit die Denomination und/oder Anzahl der Wertscheine aller dem Eingabe- und/oder Ausgabefach (22) entnommener Wertscheine ermittelt wird, und dass die Wertscheine dann in einem Zwischenspeicher (28) zwischengespeichert werden.

6. Verfahren nach Anspruch 5, **dadurch gekennzeichnet, dass**, wenn die Anzahl der Wertscheine und/oder der Gesamtwert der Wertscheine mit der planmäßigen Anzahl bzw. dem planmäßigen Gesamtwert übereinstimmen, die Wertscheine wieder aus dem Zwischenspeicher (28) entnommen, in das Eingabe- und/oder Ausgabefach (22) transportiert und an eine Bedienperson der Vorrichtung (10) ausgegeben werden.

7. Verfahren nach Anspruch 5 oder 6, **dadurch gekennzeichnet, dass**, wenn die Anzahl der Wertscheine und/oder der Gesamtwert der Wertscheine mit der planmäßigen Anzahl bzw. dem planmäßigen Gesamtwert nicht übereinstimmen, die Wertscheine wieder aus dem Zwischenspeicher (28) entnommen und einer Rejectkassette (18) oder den Geldkassetten (16), insbesondere jeweils den Geldkassetten (16), aus denen sie entnommen wurden, zugeführt werden.

8. Verfahren nach einem der Ansprüche 5 bis 7, **dadurch gekennzeichnet, dass**, wenn die Anzahl der Wertscheine und/oder der Gesamtwert der Wertscheine mit der planmäßigen Anzahl bzw. dem planmäßigen Gesamtwert nicht übereinstimmen, die Zählerstände der Geldkassetten (16) derart korrigiert werden, dass der Zählerstand wieder der tatsächlichen Anzahl an aufgenommenen Wertscheinen entspricht.

9. Verfahren nach einem der Ansprüche 1 bis 4, **dadurch gekennzeichnet, dass** die Wertscheine des Mehrabzugs zunächst einem Zwischenspeicher (28) zum Zwischenspeichern von Wertscheinen zugeführt werden, und dass die Wertscheine des Mehrfachabzugs erst nach Beendigung des Auszahlungsvörgangs dem Eingabe- und/oder Ausgabefach (22) zugeführt werden.

10. Verfahren nach Anspruch 9, **dadurch gekennzeichnet, dass** nach dem Auszahlungsvorgang zeitgleich nur die Wertscheine des Mehrfachabzugs in dem Eingabe- und/oder Ausgabefach (22) aufgenommen sind, und nur diese Wertscheine vereinzelt und der Leseeinheit (26) zugeführt werden.

11. Verfahren nach Anspruch 9 oder 10, **dadurch gekennzeichnet, dass** die Wertscheine des Mehrfachabzugs von der Leseeinheit (26) einer Rejectkassette (18) oder den Geldkassetten (16), insbesondere jeweils den Geldkassetten (16), aus denen sie entnommen wurden, zugeführt werden.

12. Verfahren nach Anspruch 11, **dadurch gekennzeichnet, dass** die Wertscheine, ohne zuvor in einem Zwischenspeicher (28) zwischengespeichert zu werden, direkt von der Leseeinheit (26) der Rejectkassette (18) bzw. den Geldkassetten (16) zugeführt werden.

13. Verfahren nach einem der Ansprüche 9 bis 12, **dadurch gekennzeichnet, dass**, nachdem die Anzahl und/oder Denomination der Wertscheine der Mehrfachabzugs ermittelt wurde, die Zählerstände der Geldkassetten (16) derart korrigiert werden, dass der Zählerstand wieder der tatsächlichen Anzahl an aufgenommenen Wertscheinen entspricht.

14. Verfahren nach Anspruch 8 oder 13, **dadurch gekennzeichnet, dass** erst die Wertscheine den Geldkassetten (16) bzw. der Rejectkassette (18) zugeführt werden und dann die Korrektur der Zählerstände erfolgt.

15. Verfahren nach Anspruch 8 oder 13, **dadurch gekennzeichnet, dass** erst die Korrektur der Zählerstände erfolgt und dann die Wertscheine den Geldkassetten (16) bzw. der Rejectkassette (18) zugeführt werden.

## Claims

1. Method of operating an apparatus for handling notes of value, in particular in an automated teller machine,
wherein the apparatus (10) comprises a depositing and/or dispensing compartment (22) into which to deposit notes of value and/or from which to dispense them to a customer,
in the case of which notes of value are removed from cash boxes (16) of the apparatus (10) in accordance with a pay-out request,
in the case of which multiple withdrawals of the notes of value removed are detected with the aid of a multiple-withdrawal sensor (30),
in the case of which, when a multiple withdrawal has been detected, at least the notes of value involved in the multiple withdrawal are transported into the depositing and/or dispensing compartment (22),
in the case of which the notes of value involved in the multiple withdrawal are separated out of the depositing and/or dispensing compartment (22),
in the case of which the denomination and/or number of the notes of value involved in the multiple withdrawal are/is determined with the aid of a reading unit (26), and
in the case of which the number and/or denomination determined for the notes of value involved in the multiple withdrawal are/is taken into account in the stock management of the cash boxes (16).

2. Method according to Claim 1, **characterized in that** use is made of just one multiple-withdrawal sensor (30) for determining multiple withdrawals for notes of value removed from all the cash boxes (16).

3. Method according to Claim 2, **characterized in that**, in a control unit, all the notes of value removed are assigned a time stamp, with the aid of which, when multiple withdrawal is determined, it is possible to assign the multiple withdrawal to the cash box (16) from which the notes of value involved in the multiple withdrawal were removed.

4. Method according to one of the preceding claims, **characterized in that** the multiple-withdrawal sensor (30) used is a thickness sensor for determining the thickness of the notes of value removed.

5. Method according to one of the preceding claims, **characterized in that**, when a multiple withdrawal has been detected, first of all all the notes of value involved in the pay-out request are transported into the depositing and/or dispensing compartment (22), **in that** the notes of value are then separated out of the depositing and/or dispensing compartment, **in that** the denomination and/or number of all the notes of value removed from the depositing and/or dispensing compartment (22) are/is determined with the aid of a reading unit, and **in that** the notes of value are then stored on an interim basis in an interim store (28).

6. Method according to Claim 5, **characterized in that**, when the number of the notes of value and/or the total value of the notes of value coincide/coincides with the planned number and/or the planned total value, the notes of value are removed again from the interim store (28), transported into the depositing and/or dispensing compartment (22) and dispensed to a person using the apparatus (10).

7. Method according to Claim 5 or 6, **characterized in that**, when the number of the notes of value and/or the total value of the notes of value do not/does not coincide with the planned number and/or the planned total value, the notes of value are removed again from the interim store (28) and fed to a reject box (18) or to the cash boxes (16), in particular in each case the cash boxes (16) from which they were removed.

8. Method according to one of Claims 5 to 7, **characterized in that**, when the number of the notes of value and/or the total value of the notes of value do not/does not coincide with the planned number and/or the planned total value, the counter readings of the cash boxes (16) are corrected such that the counter reading once again corresponds to the actual number of notes of value accommodated.

9. Method according to one of Claims 1 to 4, **characterized in that** the notes of value involved in the multiple withdrawal first of all are fed to an interim store (28) for the interim storage of notes of value, and **in that** it is only once the pay-out operation has ended that the notes of value involved in the multiple withdrawal are fed to the depositing and/or dispensing compartment (22).

10. Method according to Claim 9, **characterized in that**, following the pay-out operation, it is only the notes of value involved in the multiple withdrawal which are accommodated simultaneously in the depositing and/or dispensing compartment (22), and only these notes of value are separated and fed to the reading unit (26).

11. Method according to Claim 9 or 10, **characterized in that** the notes of value involved in the multiple withdrawal are fed from the reading unit (26) to a reject box (18) or to the cash boxes (16), in particular in each case the cash boxes (16) from which they were removed.

12. Method according to Claim 11, **characterized in that** the notes of value are fed directly from the reading unit (26) to the reject box (18), or to the cash boxes (16), without previously being stored on an interim basis in an interim store (28).

13. Method according to one of Claims 9 to 12, **characterized in that**, once the number and/or denomination of the notes of value involved in the multiple withdrawal have/has been determined, the counter readings of the cash boxes (16) are corrected such that the counter reading once again corresponds to the actual number of notes of value accommodated.

14. Method according to Claim 8 or 13, **characterized in that** first of all the notes of value are fed to the cash boxes (16), or to the reject box (18), and then the counter readings are corrected.

15. Method according to Claim 8 or 13, **characterized in that** first of all the counter readings are corrected and then the notes of value are fed to the cash boxes (16), or to the reject box (18).

## Revendications

1. Procédé pour faire fonctionner un dispositif de manipulation de papiers-valeurs, notamment un guichet bancaire automatique,
le dispositif (10) comportant un compartiment d'entrée et/ou de sortie (22) servant à introduire et/ou à délivrer des papiers-valeurs à un client,
lors duquel des papiers-valeurs sont prélevés de caissettes (16) du dispositif (10) conformément à une demande de décaissement,
lors duquel des retraits multiples des papiers-valeurs prélevés sont détectés à l'aide d'un détecteur de retrait multiple (30),
lors duquel, lorsqu'un retrait multiple a été détecté, au moins les papiers-valeurs du retrait multiple sont transportés dans le compartiment d'entrée et/ou de sortie (22),
lors duquel les papiers-valeurs du retrait multiple sont séparés hors du compartiment d'entrée et/ou de sortie (22),
lors duquel la dénomination et/ou le nombre de papiers-valeurs du retrait multiple est déterminé à l'aide d'une unité de lecture (26) et
lors duquel le nombre et/ou la dénomination déterminé des papiers-valeurs du retrait multiple est pris en compte lors de la gestion de l'état des caissettes (16).

2. Procédé selon la revendication 1, **caractérisé en ce qu'**un seul détecteur de retrait multiple (30) est utilisé pour déterminer des retraits multiples pour les papiers-valeurs prélevés de toutes les caissettes (16).

3. Procédé selon la revendication 2, **caractérisé en ce qu'**un horodatage est associé dans une unité de commande à tous les papiers-valeurs prélevés, lequel permet d'associer le retrait multiple à la caissette (16) duquel il a été prélevé lors de la détermination d'un retrait multiple.

4. Procédé selon l'une des revendications précédentes, **caractérisé en ce que** le détecteur de retrait multiple (30) utilisé est un détecteur d'épaisseur destiné à déterminer l'épaisseur des papiers-valeurs prélevés.

5. Procédé selon l'une des revendications précédentes, **caractérisé en ce que** lorsqu'un retrait multiple a été détecté, tous les papiers-valeurs de la demande de décaissement sont tout d'abord transportés dans le compartiment d'entrée et/ou de sortie (22), **en ce que** les papiers-valeurs sont ensuite séparés hors du compartiment d'entrée et/ou de sortie, **en ce que** la dénomination et/ou le nombre de papiers-valeurs de tous les papiers-valeurs prélevés du compartiment d'entrée et/ou de sortie (22) est déterminé (e) à l'aide d'une unité de lecture, et **en ce que** les papiers-valeurs sont ensuite stockés temporairement dans une unité de stockage intermédiaire (28).

6. Procédé selon la revendication 5, **caractérisé en ce que** lorsque le nombre de papiers-valeurs et/ou la valeur totale des papiers-valeurs coïncident avec le nombre programmé ou la valeur totale programmée, les papiers-valeurs sont de nouveau prélevés hors de l'unité de stockage intermédiaire (28), transportés dans le compartiment d'entrée et/ou de sortie (22) et délivrés à l'opérateur du dispositif (10).

7. Procédé selon la revendication 5 ou 6, **caractérisé en ce que** lorsque le nombre de papiers-valeurs et/ou la valeur totale des papiers-valeurs ne coïncident pas avec le nombre programmé ou la valeur totale programmée, les papiers-valeurs sont de nouveau prélevés hors de l'unité de stockage intermédiaire (28) et acheminés à une caissette de rejet (18) ou aux caissettes (16), notamment respectivement aux caissettes (16) desquelles ils ont été prélevés.

8. Procédé selon l'une des revendications 5 à 7, **caractérisé en ce que** lorsque le nombre de papiers-valeurs et/ou la valeur totale des papiers-valeurs ne coïncident pas avec le nombre programmé ou la valeur totale programmée, les états des compteurs des caissettes (16) sont corrigés de telle sorte que l'état de compteur correspond de nouveau au nombre effectif de papiers-valeurs accueillis.

9. Procédé selon l'une des revendications 1 à 4, **caractérisé en ce que** les papiers-valeurs du retrait multiple sont tout d'abord acheminés à une unité de stockage intermédiaire (28) servant au stockage temporaire de papiers-valeurs, et **en ce que** les papiers-valeurs du retrait multiple ne sont acheminés au compartiment d'entrée et/ou de sortie (22) qu'une fois l'opération de décaissement terminée.

10. Procédé selon la revendication 9, **caractérisé en ce qu'**après l'opération de décaissement, seuls les papiers-valeurs du retrait multiple sont accueillis simultanément dans le compartiment d'entrée et/ou de sortie (22) et seuls ces papiers-valeurs sont séparés et acheminés à l'unité de lecture (26).

11. Procédé selon la revendication 9 ou 10, **caractérisé en ce que** les papiers-valeurs du retrait multiple sont acheminés de l'unité de lecture (26) à une caissette de rejet (18) ou aux caissettes (16), notamment respectivement aux caissettes (16) desquelles ils ont été prélevés.

12. Procédé selon la revendication 11, **caractérisé en ce que** les papiers-valeurs, sans être préalablement stockés temporairement dans une unité de stockage intermédiaire (28), sont acheminés directement de l'unité de lecture (26) à la caissette de rejet (18) ou aux caissettes (16).

13. Procédé selon l'une des revendications 9 à 12, **caractérisé en ce qu'**après que le nombre et/ou la dénomination des papiers-valeurs du retrait multiple ait été déterminé(e), les états des compteurs des caissettes (16) sont corrigés de telle sorte que l'état de compteur correspond de nouveau au nombre effectif de papiers-valeurs acceuillis.

14. Procédé selon la revendication 8 ou 13, **caractérisé en ce que** les papiers-valeurs sont tout d'abord acheminés aux caissettes (16) ou à la caissette de rejet (18) et ensuite a lieu la correction des états des compteurs.

15. Procédé selon la revendication 8 ou 13, **caractérisé en ce que** la correction des états des compteurs a tout d'abord lieu et ensuite les papiers-valeurs sont acheminés aux caissettes (16) ou à la caissette de rejet (18).
